# EUROPEAN PATENT APPLICATION

(11) **EP 4 571 095 A1**
(43) Date of publication of application: **18.06.2025**
(21) Application number: 23212801.7
(22) Date of filing: 28.11.2023
(51) Int. Cl.: F03D 1/06, B25J 15/06, B25J 9/02, B29C 31/08, B29C 37/00, B29C 33/26, B29C 65/78, B29C 70/54, B64F 5/10, B29D 99/00, B29C 33/12, B29C 33/44, B29C 41/42, B29L 31/08, E05D 3/00

(54) **SYSTEM AND METHOD FOR MANUFACTURING WIND TURBINE BLADES**

(71) Applicant: LM Wind Power A/S, 6000 Kolding (DK)
(72) Inventor: NYTOFT, Thomas, 6640 Lunderskov (DK); MOSEGAARD, Ivan Kaab, 6640 Lunderskov (DK)
(74) Representative: Bardehle Pagenberg S.L.

(57) **Abstract**

The present disclosure relates to systems for demolding a wind turbine blade (10). The system comprises a demolding tool (550) comprising one or more grippers (551) configured to grip the wind turbine blade (10), the wind turbine blade (10) being held in a blade mold (100). The system further comprises one or more hinge devices (300) comprising a static member (302) and a movable member (301), the movable member (301) being configured to be connected to the demolding tool (550) and being further configured to rotate with respect to the static member (302) about a pivot axis (304). The present disclosure further comprises a method (900) for demolding a wind turbine blade (10).

## Description

### FIELD

The present disclosure relates to wind turbine blades, and more specifically, to a method for demolding wind turbine blades during manufacturing. The disclosure further concerns a system used in the demolding of wind turbine blades during blade manufacturing.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

The wind turbine blades are often made of fiber-reinforced polymer and are usually manufactured as shell parts in molds, where the top side and the bottom side of the blade profile (typically the upwind or pressure side and the downwind or suction side, respectively) are manufactured separately by arranging glass fiber mats in each of the two molds and injecting a liquid resin, which subsequently is cured. Afterwards, the two halves are glued together, often by means of internal flange parts. Glue is applied to the inner face of the lower blade half before the upper blade half is lowered thereon or *vice versa.* Additionally, one or more reinforcing profiles (shear webs), extending along the length of the blade, are often attached to the inside of the lower blade half prior to gluing to the upper blade half.

It is known to manufacture wind turbine blades where each of the wind turbine blades are molded and assembled at the same workstation. The wind turbine blade may then be moved to another workstation, typically a finishing workstation, where the wind turbine blade is cut, trimmed, painted and the final fittings are mounted on the wind turbine blade.

However, as the demand for wind turbines is rapidly increasing, it is found increasingly difficult to scale the conventional manufacturing method to accommodate the demand for several reasons: Firstly, the usual manufacturing method requires that all the materials required for manufacturing a wind turbine blade, e.g. resin and fiber reinforcement material, be transported to every workstation, which is logistically demanding. Secondly, every workstation has to be equipped with tools necessary for every single manufacturing step in the process, which results in a significant overhead. Additionally, the usual manufacturing method requires a mold in every single workstation, which is expensive since production and maintenance of molds are time consuming and thus expensive. Furthermore, the conventional manufacturing method occupies a lot of space, and since the workers at each workstation have to perform a variety of manufacturing steps, there is a risk that the quality of the manufactured wind turbine blades may suffer.

So far, wind turbine production still relies on the above-mentioned manufacturing method. EP2403708 proposes an alternative manufacturing method and an alternative manufacturing line involving "moving molds". In this prior art document, a manufacturing line is disclosed, wherein wind turbine blades are formed in a number of mold sets, each of the mold sets comprising at least a first mold comprising a first mold cavity. The manufacturing line further comprises a number of separate workstations, where separate manufacturing steps are carried out. In particular, a sequence of steps in different workstations may be carried out to manufacture each of the blade shell parts. Once manufactured, the two blade shell parts are moved to a separate workstation where they are adhered to each other, e.g. by gluing flanges located at the leading edge and trailing edge of the finished wind turbine blade. Hereby, a method is provided whereby wind turbine blades can be manufactured using fewer resources e.g. molds and tools, or alternatively improving the throughput as the method increases the number of manufactured wind turbine blades per time unit compared to conventionally project oriented manufacturing methods.

Regardless of whether a conventional manufacturing method, i.e. a method where each wind turbine blade is molded and assembled at the same workstation, or an alternative manufacturing method involving "moving molds" is employed, a manufacturing step comprising demolding of the blade may need to be carried out. Such demolding comprises lifting and separating the manufactured blade, comprising the attached lower and upper blade halves, from a blade mold.

A crane or hoisting assembly is commonly used to lift and demold the blade. The blade is typically lifted from the mold by hoisting from locations in the blade root and blade tip area. Once demolded, the wind turbine blade is typically placed in some conveying means so that it can be moved to a finishing workstation.

The use of cranes or hoisting assemblies in order to conduct the demolding step exhibits a number of difficulties, especially as the industry moves to increasingly larger and heavier wind turbine blades. Hence, the arrangement of such overhead equipment imposes logistic constraints on the assembly plant. Furthermore, the use of overhead cranes to hoist the manufactured blade may also result in swaying of the suspended blade, thus increasing the risk of potential damage of the manufactured blade during the operation. Furthermore, the use of cranes or other overhead hoisting assemblies may involve working under suspended loads, which may also pose a risk for operators in the manufacturing plant.

The present disclosure provides examples of methods and systems for blade demolding during blade manufacturing that provide improvements over prior art methods and systems.

### SUMMARY

In an aspect of the present disclosure, a system for demolding a wind turbine blade is provided. The system comprises a demolding tool comprising one or more grippers configured to grip the wind turbine blade, the wind turbine blade being held in a blade mold. The system also comprises one or more hinge devices comprising a static member and a movable member, the movable member being configured to be connected to the demolding tool and being further configured to rotate with respect to the static member about a pivot axis

According to this aspect, a system allowing demolding of a closed blade, i.e. a blade being manufactured after the attachment of the two blade halves, is provided. Advantageously, the disclosed system does not require cranes or other lifting equipment. Consequently, the use of overhead cranes with a large span and high load carrying capability can be eliminated, thus reducing associated costs. Logistics of the manufacturing plant may also be simplified due to less stringent requirements when compared with those arising from the use of heavy lifting equipment. Thus, in some cases, the use of such heavy lifting equipment may become a limiting factor in the size of the blades that can be produced in a building of a certain height.

In examples of the disclosure, the number of hinge devices may be adapted to the length of the blade. Hinge devices may be distributed over this length so as to achieve a more uniform load distribution during the demolding operation, thus reducing the risk of damaging the blade. Furthermore, in some examples of the disclosure, the hinge devices used for blade demolding may also be employed for other manufacturing steps, thus resulting in further cost savings.

In some examples, the pivot axis may be substantially horizontal i.e. the axis may be substantially parallel to the floor. In other examples, the pivot axis may be arranged substantially parallel to a longitudinal axis of the first blade mold. In some of these cases, the longitudinal axis of the first blade mold may be substantially horizontal.

In another aspect of the disclosure, a method for demolding a wind turbine blade with a system according to the previous aspect is provided. The method comprises providing the blade mold holding the blade, providing the one or more hinge devices, and providing the demolding tool. The method further comprises connecting the demolding tool to the movable member of the hinge devices and rotating the movable member of the hinge devices about a pivot axis so as to bring the demolding tool in proximity of the blade. The method also comprises attaching the grippers of the demolding tool to the blade surface and lifting the blade out of the blade mold using the demolding tool.

According to this aspect, a blade demolding method is provided which exhibits significant advantages over methods based on overhead lifting equipment. Indeed, the use of hinge devices to grip and lift the blade from the blade mold reduces the working operations under suspended loads, thus reducing safety risks of the operation. Furthermore, a more controlled gripping of the blade is achieved by means of the demolding tool. This improved control avoids swaying of the blade, which may result from the commonly used solution comprising suspending the blade with some lifting equipment. Mitigation of such swaying prevents potential damage on the blade itself and it also enables a smoother method to transfer the demolded blade to subsequent manufacturing steps.

As used throughout the present disclosure, a workstation may be regarded as a part of a production line, in which individual operations are carried out on a wind turbine blade or precursor of a blade, particularly a half shell of a blade. Some of the operations may be carried out by machines or "robots", although other operations may be carried out manually in some examples. A workstation may generally be regarded as an area of a factory floor, which is dedicated to a plurality of operations.

Throughout this disclosure, a blade should be understood as referring not only to a completely finished wind turbine blade, but also covering a blade during its manufacturing after the step of attaching or gluing of the two blade halves together. The term closed blade may also be used to refer to that state of the manufactured wind turbine blade.

### BRIEF DESCRIPTION OF THE DRAWINGS

Figure 1 illustrates a perspective view of an example of a wind turbine;
Figures 2A - 2B illustrate a perspective view of an example of a wind turbine blade and an example of an internal structure of a wind turbine blade;
Figures 3A - 3D illustrate an example of a system for use during blade manufacturing, the system comprising a tool for blade demolding;
Figure 4 is a flowchart of a method for demolding a wind turbine blade according to an example;
Figures 5A - 5D illustrate an example of the final steps of a method for demolding a wind turbine blade;
Figures 6A - 6C illustrate a further example of the final steps of a method for demolding a wind turbine blade.

### DETAILED DESCRIPTION OF EXAMPLES

Reference now will be made in detail to examples of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one example can be used with another example to yield a still further example. Thus, it is intended that the present disclosure covers such modifications and variations as come within the scope of the appended claims and their equivalents.

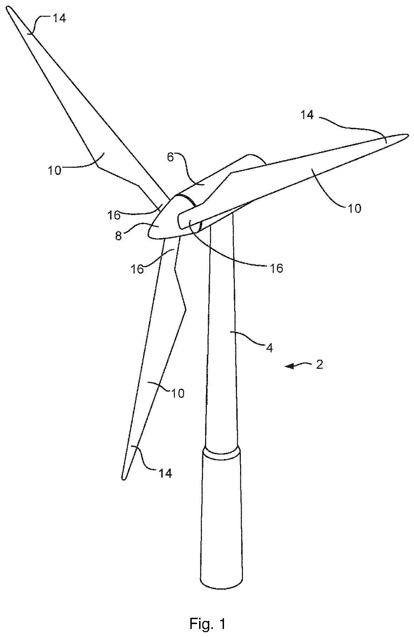

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

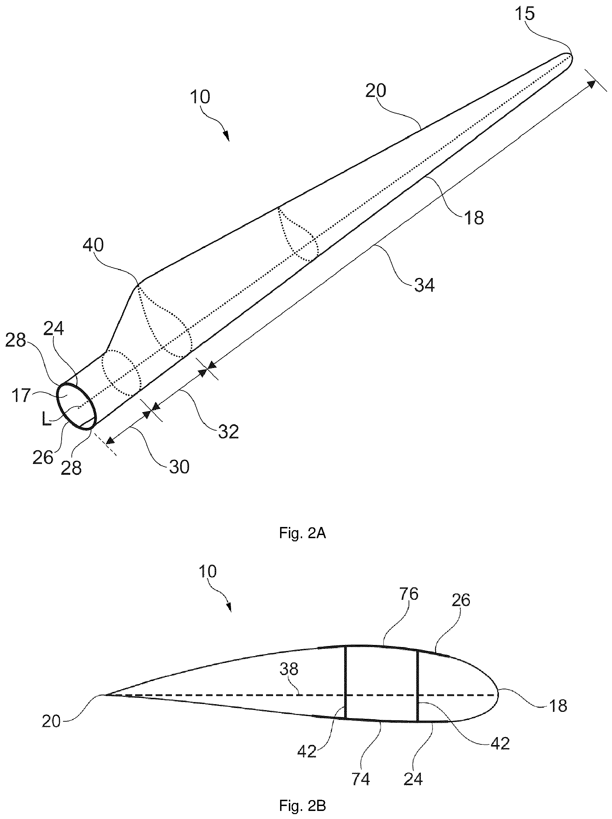

Fig. 2 shows a schematic view of an example of a wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub 8, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub 8. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance from the hub 8. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the distance to the hub.

The wind turbine blade 10 comprises a blade shell comprising two blade shell parts (also referred to as half shells or blade halves), a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular or semi-oval outer cross-sectional shape.

Fig. 2B is a schematic diagram illustrating a cross sectional view of an example of a wind turbine blade 10, e.g. a cross-sectional view of the airfoil region of the wind turbine blade 10. The wind turbine blade 10 comprises a leading edge 18, a trailing edge 20, a pressure side shell part 24, a suction side shell part 26, a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

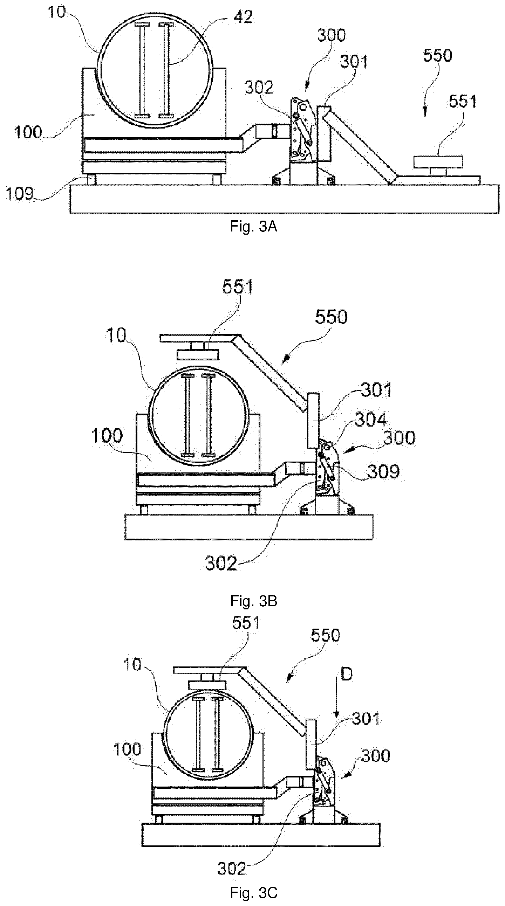

Figures 3A - 3D illustrate an example of a system for demolding a wind turbine blade 10. The system comprises a demolding tool 550, which comprises one or more grippers 551 to grip the wind turbine blade 10, the wind turbine blade 10 being held in a blade mold 100. The system further comprises one or more hinge devices 300 comprising a static member 302 and a movable member 301, the movable member 301 being configured to be connected to the demolding tool 550 and being further configured to rotate with respect to the static member 302 about a pivot axis 304.

In examples of the disclosure, the pivot axis 304 may be a substantially horizontal pivot axis, i.e. a pivot axis substantially parallel to the floor. The substantially horizontal pivot axis 304 may be parallel to a longitudinal axis of the blade 10. In other examples, the pivot axis 304 may be inclined with respect to the horizontal plane. This may be due to tolerances in the system and/or to specific choices in the orientation of the equipment, e.g. of the blade 10 or the demolding tool 550.

The system shown in Figures 3A-3D allows gripping a closed blade, i.e. a manufactured blade after the two blade shells have been glued together. The system does not require expensive cranes or other lifting equipment, thus reducing working operations under suspended loads. Furthermore, a more controlled gripping of the blade is achieved by the demolding tool 550. This improved control avoids swaying of the blade, thus mitigating potential damage to the blade and improving overall safety of the operation.

The hinge devices 300 may be such that the movable member 301 may be configured to be releasably connected to the demolding tool 550. In this manner, a versatile system may be provided. In order to enable the releasable connection, the hinge devices 300 may comprise connection interfaces (not shown) configured to be releasably connected to corresponding connection interfaces (not shown) of the demolding tool 550.

The connection interfaces may in some examples comprise one or more hooks in one of the hinge devices 300 or the demolding tool 550 configured to engage with connection pins of the other of the hinge device 300 and the demolding tool 550. Furthermore, the connection interfaces may, in some examples, comprise also a locking mechanism (not shown in the figure), e.g. a hydraulic pin in the movable member 301 of the hinge device 300 which may be arranged to engage a pad eye in the demolding tool 550.

As also shown in the example of Figures 3A-3D, the static member 302 of the hinge devices 300 may be configured to be connected to the blade mold 100. In such case, similar connection interfaces to those used for the releasable connection between the movable member 301 of the hinge devices 300 and the demolding tool 550 may be provided.

The coupling of the static member 302 of the hinge devices 300 to the blade mold 100 may ensure a precise relative position between the parts and it may provide an anchor point for the hinge devices 300 themselves, which may improve the stability of the system and the accuracy of the method.

Although only a single hinge device 300 is depicted in Figures 3A-3D, an example of the system may comprise a plurality of hinge devices 300, which may be distributed along the length of the blade 10. The length of some wind turbines blades is already exceeding 100 meters so, in order to improve the gripping of the blade 10, a plurality of hinge devices 300 may be arranged along the span of the blade 10. More specifically, hinge devices 300 may be arranged at both the root area 16 and the tip area 14 of the blade. The hinge devices 300 may then be connected to the demolding tool 550, which may accordingly extend over substantially the whole length of the blade 10. In this manner, a uniform distribution of the load may be obtained.

Different grippers 551 may be envisaged in different examples of the demolding tool 550. Specifically, the grippers 551 may comprise a vacuum based connection. Alternatively, or in combination with vacuum connections, the grippers 551 may comprise a mechanical interface (not visible in Figures 3A-3D) configured to engage with a corresponding mechanical interfaces on the blade 10. The use of vacuum based connections or holders may be particularly suitable to enable automation of the process. Furthermore, vacuum connections may be relatively simple to implement as they may not require any specific feature on the blades themselves. On the other hand, mechanical interfaces may be preferred to increase safety of the demolding operation. Similarly, automation may be needed although, in this case, a modification of the blade 10 surface may be carried out in order to enable proper mechanical interference.

Figure 3A depicts the system in a first configuration, i.e. with the demolding tool 550 resting on a floor of the manufacturing plant and with the hinge devices 300 in a so-called "open configuration". The term "open configuration" is used to refer to the situation where the movable member 301 of the hinge devices 300 is in the position where coupling (and uncoupling) to the demolding tool 250 may take place. This corresponds to the situation wherein the blade mold 100, the hinge devices 300 and the demolding tool 250 are substantially placed side by side.

After rotation of the movable member 301 of the hinge device 300 about the pivot axis 304, the demolding tool 550 may be placed in proximity of the blade 10. More specifically, the grippers 551 of the blade demolding tool 550 may be positioned in proximity of the blade 10 as shown in Figure 3B. In some examples of the disclosure, the system may be dimensioned such that the rotation of the movable member 301 brings the grippers 551 into contact with the blade 10. In this example, the pivot axis 304 may be a substantially horizontal pivot axis.

In other examples of the system, the system may be configured to enable a method wherein, before attaching the grippers 551 to the blade 10 surface, a substantially vertical displacement of the grippers 551 in a downwards direction may be carried out so as to bring the grippers 551 into contact with the surface of the blade 10. This is illustrated by Figures 3B and 3C. Thus, Figure 3B shows the configuration of the system after rotation of the movable member 301 of the hinge devices 300 about the pivot axis 304. As seen in Figure 3B, this rotation results in the grippers 551 being positioned closely to the upper surface of the blade 10. Nevertheless, a gap may still exist. In order to close this gap, a vertically downwards movement along direction D may be carried out as depicted in Figure 3C. After such vertical displacement, the grippers 551 may be brought into contact with the surface of the blade 10.

Such a two-step approach may be preferred. More specifically, the provision of such a vertical movement may be provided to absorb minor errors during the positioning and turning operations. In this manner, the reliability of the maneuver may be improved by providing an additional degree of freedom right before establishing the contact between the grippers 551 and the surface of the blade 10. Furthermore, the vertical movement of the grippers 551 may allow adjusting to different diameters of the blade 10. This may be the case if the same demolding tool is intended for use with different blades.

Moreover, as previously mentioned, a plurality of hinge devices 300 may be arranged along the length of the blade 10 and the demolding tool 550 may be attached to those hinge devices 300. More specifically, a plurality of grippers 551 may also be distributed along the length of the blade 10. It is also well-known that the diameter of the blades 10 may vary along the length of the blade 10 (see, e.g. Figure 2). Consequently, in examples of the disclosure, it may be advantageous to use a first step to rotate the movable members 301 of the hinge devices 300 and position the demolding tools 550 with the corresponding grippers 551 above the surface of the blade 10. Then, a second step may be used to individually adjust the grippers 551, distributed along the length of the blade 10, to the dimensions of the blade 10 at each respective location. In this manner, a better gripping of the blade 10 may be obtained. In further examples, the grippers 551 may be adapted to different portions of the blade 10, i.e. some grippers 551 be more suitable for gripping a root portion with a large diameter or cross-section, and potentially a small vertical movement after rotation. Some other grippers may be more suitable for gripping a mid-blade portion or a tip portion with a smaller cross-section and a larger vertical movement after rotation

Different alternatives may be envisaged to implement such vertical movement in different examples. In the example shown in Figures 3B and 3C, the movable member 301 of the hinge devices 300 may be configured to rotate with respect to the static member 302 about a substantially horizontal pivot axis 304, and the horizontal pivot axis 304 may be configured to be vertically displaceable. Thus, although not clearly visible in Figures 3B-3C, the horizontal pivot point 304 may move slightly downwards in the D direction in order to transition from the state in Figure 3B to the state in Figure 3C.

In other examples, only the grippers 551 may be displaceable with respect to the demolding tool 550. In these examples, an actuator may be arranged in a position of the demolding tool itself 550 to allow displacing the grippers 551.

Upon establishing contact between the grippers 551 and the blade 10, the grippers 551 may be activated to enable gripping of the blade 10. In examples of the disclosure, said activation may be automatic whereas, in some other examples, a manual activation may be preferred. In any case, and as already mentioned, different actuators, including vacuum based connectors and mechanical connectors, may be envisaged in different examples.

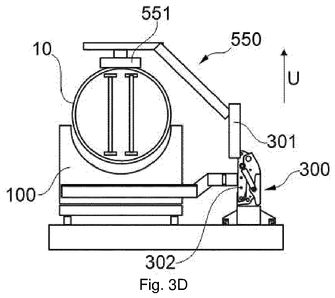

Figure 3D shows the subsequent stage in the demolding operation. Thus, after gripping the blade 10 with the grippers 551, such gripper 551 are moved upwards (direction U) so as to lift the blade 10. In this manner, the blade 10 is separated from the blade mold 100, i.e. the blade 10 is demolded. As shown in Figure 3D, the blade 10 is then supported or gripped by the grippers 551. In this manner, a stable fixation of the blade 10 is achieved so that no swaying or other oscillations of the blade 10 are present as it may be the case if using cranes or other hoisting equipment. Once the blade 10 is lifted, different example alternatives may exist for the continuation of the maneuver as will be shown below.

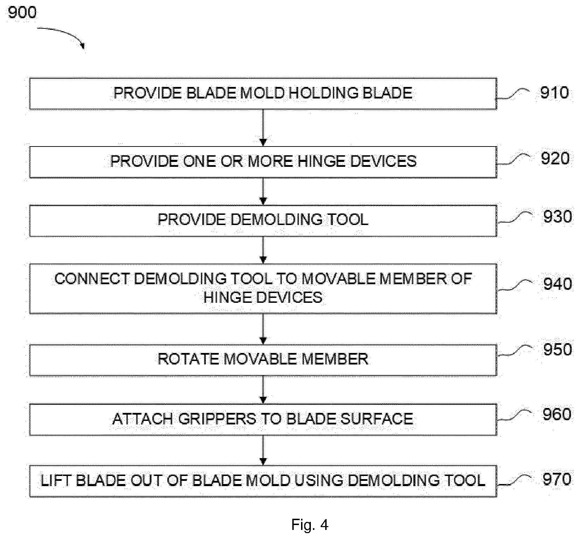

An example of a method 900 for demolding a blade 10 with a system like the one depicted in Figures 3A-3D is exemplified by the flowchart presented in Figure 4. Method 900 comprises, at block 910, providing the blade mold 100 holding the blade 10. The method also comprises providing the one or more hinge devices 300 in block 920 and providing the demolding tool 550 in block 930. Block 940 of the method 900 comprises connecting the demolding tool 550 to the movable member 301 of the hinge devices 300. The method also comprises, at block 950, rotating the movable member 301 of the hinge devices 300 about a pivot axis 304 so as to bring the demolding tool 550 in proximity of the blade 10. Block 960 of method 900 comprises attaching the grippers 551 of the demolding tool 550 to the blade 10 surface. Finally, block 970 comprises lifting the blade 10 out of the blade mold 110 using the demolding tool 550.

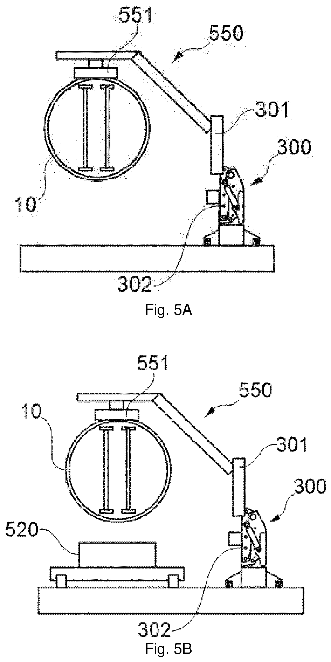

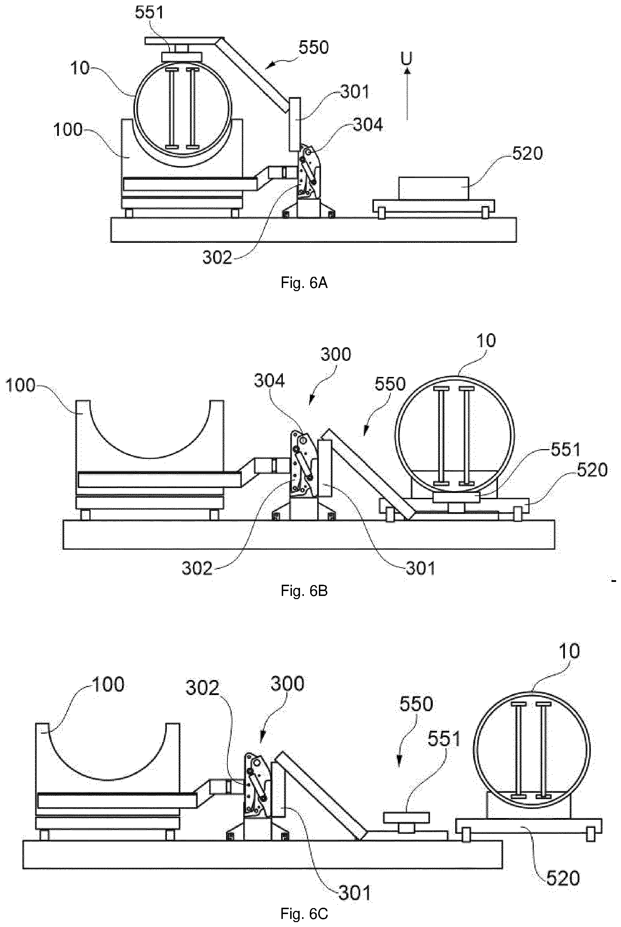

Although a number of blocks are provided in method 900, the method itself is not limited to the specific order or sequence indicated in Figure 4. Furthermore, additional blocks may be added to satisfy specific needs and/or to further improve the method. Some of those additional blocks will be now explained with reference to Figures 5A-5D and 6A-6C.

After lifting of the blade 10 from the blade mold 100 (Figure 3D), different subsequent actions may be carried out depending on the design of the blade manufacturing line.

In one example, the method may comprise, after lifting the blade 10 out of the blade mold 100, removing the blade mold 100 and positioning one or more blade carts 520 underneath the lifted blade 10. The blade mold 100 may e.g. return to a starting workstation of the manufacturing line to be used in the manufacture of another blade.

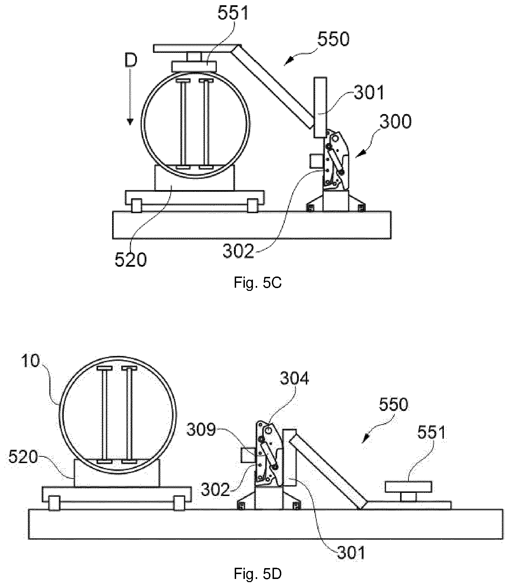

The method may further comprise lowering the blade 10 onto the blade carts 520 by vertically displacing the grippers 551 in a downwards direction. Finally, the method may comprise releasing the blade 10 from the grippers 551. This sequence is schematically illustrated by Figures 5A - 5D. Thus, Figure 5A shows the system after having removed the blade mold 100. Subsequently, a blade cart 520 is placed under the lifted blade 10 in Figure 5B. Figure 5C shows the lowering of the blade 10 along the vertical direction, D, until the blade 10 rests on the blade cart 520. The grippers 551 may then be released. Finally, Figure 5D shows an additional step in this example, which comprises rotating the movable member 301 of the hinge device so that the demolding tool 550 is returned to the original, i.e. to the coupling/uncoupling position or "open configuration".

In this example, the demolded blade 10 may be moved to another workstation, e.g. to a testing (NDT) workstation or a finishing workstation for some additional steps where the wind turbine blade 10 may be cut, trimmed, painted and the final fittings may be mounted. Subsequently, a new blade mold containing a new blade may be arranged in position in the same workstation for the corresponding demolding operation and/or for other operations, including e.g. the previously illustrated operations such as closing of the mold or placement of a shear web.

In another example of a method according to the disclosure, a different sequence may be followed as schematically depicted in Figures 6A - 6C. In this example, the blade mold 100 may be provided at a first side of the hinge devices 300 (left side in Figures 6A-6C). The method may further comprise positioning one or more blade carts 520 at a second side of the hinge devices 300 (right side in Figures 6A-6C). The demolding tool 550 may be rotated together with the blade 10 attached to the grippers 551 by rotating the movable members 301 of the hinge devices 300 about a pivot axis 304 so as to bring the blade 10 into contact with the blade carts 520. Finally, the blade 10 may be released from the grippers 551 of the demolding tool 550.

This example is shown in Figure 6A, in which a blade cart 520 is positioned on the other side of the blade mold 100 with respect to the hinge devices 300, and in Figure 6B, which depicts the situation after the blade 10 is moved from the area of the blade mold 100 to the area of the blade cart 520. Finally, as shown in figure 6C, the method may comprise moving the blade out of the workstation, e.g. so that it can be moved to a further workstation such as an NDT workstation or a finishing workstation. Similarly, although not shown in the figures, the blade mold 100 may be released from the hinge devices 300 and moved out of the workstation. In this manner, the workstation may be left empty and ready to receive, e.g. a further blade mold containing a new blade to demold and/or for other operations as commented before.

Furthermore, in an example of the disclosure, at least one the hinge devices 300 used for demolding of the blade 10 may also be used in at least a further manufacturing step of the wind turbine blade 10 and, more specifically, in a step comprising attaching a shear web 42 on a first blade shell or positioning a second blade shell on a first blade shell.

This written description uses examples to disclose the teaching, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various examples described, as well as other known equivalents for each such aspects, can be mixed and matched by one of ordinary skill in the art to construct additional examples and techniques in accordance with principles of this application. If reference signs related to drawings are placed in parentheses in a claim, they are solely for attempting to increase the intelligibility of the claim, and shall not be construed as limiting the scope of the claim.

## Claims

1. A system for demolding a wind turbine blade (10), the system comprising:
- a demolding tool (550) comprising one or more grippers (551) configured to grip the wind turbine blade (10), the wind turbine blade (10) being held in a blade mold (100);
- one or more hinge devices (300) comprising a static member (302) and a movable member (301), the movable member (301) being configured to be connected to the demolding tool (550) and being further configured to rotate with respect to the static member (302) about a pivot axis (304).

2. The system of claim 1 wherein the movable member (301) of the hinge devices (302) is configured to be releasably connected to the demolding tool (550).

3. The system of any of claims 1 or 2 wherein the static member (302) of the hinge devices (300) is configured to be connected to the blade mold (100).

4. The system of any previous claim wherein a plurality of hinge devices (300) are distributed along the length of the blade (10).

5. The system of any previous claim wherein the grippers (551) comprise a vacuum based connection.

6. The system of any previous claim wherein the grippers (551) comprise a mechanical interface configured to engage with a corresponding mechanical interface on the blade (10) surface.

7. The system of any previous claim wherein the movable member (301) is configured to rotate with respect to the static member (302) about a substantially horizontal pivot axis (304), the pivot axis (304) being vertically displaceable.

8. The system of any previous claim wherein the grippers (551) are vertically displaceable with respect to the demolding tool (550).

9. A method for demolding a wind turbine blade (10) with a system according to any of claims 1 to 8, the method comprising:
- providing the blade mold (100) holding the blade (10);
- providing the one or more hinge devices (300);
- providing the demolding tool (550);
- connecting the demolding tool (550) to the movable member (301) of the hinge devices (300);
- rotating the movable member (301) of the hinge devices (300) about a pivot axis (304) so as to bring the demolding tool (550) in proximity of the blade (10);
- attaching the grippers (551) of the demolding tool (550) to the blade (10) surface; and
- lifting the blade (11) out of the blade mold (100) using the demolding tool (550).

10. The method of claim 9 further comprising, before attaching the grippers (551) to the blade (10) surface, substantially vertically displacing the grippers (551) in a downwards direction so as to bring the grippers (551) into contact with the surface of the blade (10).

11. The method of claim 10, wherein the movable member (301) of the hinge devices (300) is configured to rotate with respect to the static member (302) about a substantially horizontal pivot axis (304), and vertically displacing the grippers (551) comprises vertically displacing the pivot axis (304).

12. The method of any of claims 10 or 11, wherein vertically displacing the grippers (551) comprises vertically displacing the grippers (551) with respect to the demolding tool (550).

13. The method of any of claims 9 to 12, the method further comprising:
- after lifting the blade (10) out of the blade mold (100), removing the blade mold (100);
- positioning a blade cart (520) underneath the lifted blade (10);
- lowering the blade (10) onto the blade cart (520) by vertically displacing the grippers (551) in a downwards direction;
- releasing the blade (10) from the grippers (551).

14. The method of any of claims 9 to 12 wherein the blade mold (100) is provided at a first side of the hinge devices (300), the method further comprising:
- positioning a blade cart (520) at a second side of the hinge devices (300) opposite to the first side;
- rotating the demolding tool (550) together with the blade (10) attached to the grippers (551) by rotating the movable members (301) of the hinge devices (300) about a pivot axis (304) so as to bring the blade (10) into contact with the blade cart (520);
- releasing the blade (10) from the grippers (551) of the demolding tool (550).

15. The method of any of claims 9 to 14 further comprising using the hinge devices (300) in at least a further manufacturing step of the wind turbine blade (10) and, more specifically, wherein the further manufacturing step comprises attaching a shear web on a first blade shell or positioning a second blade shell on a first blade shell.
